# EUROPÄISCHE PATENTSCHRIFT

(11) **EP 2 899 599 B1**
(45) Veröffentlichungstag und Bekanntmachung des Hinweises auf die Patenterteilung: **15.11.2017**
(21) Anmeldenummer: 14004126.0
(22) Anmeldetag: 06.12.2014
(51) Int. Cl.: G04D 1/00, B23Q 3/06

(54) **WERKSTÜCKTRÄGER FÜR EINE FRÄSMASCHINE**
WORKPIECE HOLDER FOR A MILLING MACHINE
SUPPORT DE PIÈCE POUR UNE FRAISEUSE

(30) Priorität: 22.01.2014 DE 102014000664
(43) Veröffentlichungstag der Anmeldung: 29.07.2015
(73) Patentinhaber: KERN Microtechnik GmbH, 82438 Eschenlohe (DE)
(72) Erfinder: Wolf, Florian, 82439 Kleinweil (DE)
(74) Vertreter: Flosdorff, Jürgen

(56) Entgegenhaltungen:
- CH-B5- 604 264
- DE-A1- 19 508 316
- DE-A1-102009 015 919

## Beschreibung

Die Erfindung betrifft einen Werkstückträger für Rohlinge, die in einer Fräsmaschine bearbeitet werden, wobei der Werkstückträger bevorzugt mehrere Rohlinge an nebeneinander angeordneten Bearbeitungsstellen trägt.

Aus den Rohlingen können in dem Arbeitsraum einer Fräsmaschine alle möglichen Bauteile gefertigt werden, beispielsweise Platinen mechanischer Uhren, die mit höchster Präzision zu bearbeiten sind. Ein Rohling für eine Uhrenplatine wird an drei Seiten bearbeitet, nämlich an der Oberseite und der Unterseite des Rohlings sowie an einem seitlichen Rand. Hierzu wird bisher der Rohling zumindest einmal in einem Werkstückträger umgespannt, damit nach der Fertigstellung einer Oberseite die gegenüberliegende Unterseite durch das Fräswerkzeug bearbeitet werden kann. Meist wird der Rohling dann noch einmal umgespannt, damit auch.ein seitlicher Rand gefräst werden kann. Dieses Umspannen des Rohlings verlängert nicht nur die Bearbeitungszeit bei der Herstellung der Uhrenplatine, sondern es leidet hierunter auch die Genauigkeit der Bearbeitung. Ein weiterer Nachteil der bisherigen Arbeitsweise besteht darin, dass bei der Herstellung einer großen Anzahl von Uhrenplatinen zunächst jeweils nur die eine Seite einer Charge bearbeitet wird, nach deren Fertigstellung die erste Umspannung zur Bearbeitung der zweiten Seite erfolgt. Außerdem erfolgt an allen Werkstücken die Fräsbearbeitung einer Randkante. Diese Vorgehensweise hat eine beträchtliche Lagerhaltung zur Folge, da die Werkstücke zwischen den einzelnen Schritten zwischengelagert werden müssen.

Die DE 10 2009 015 919 A1 offenbart eine Vorrichtung zur Herstellung von zumindest einem Werkstück, die wenigstens einen ersten Klemm-Mechanismus enthält, mit dem Rohlinge so an ihren Bearbeitungsstellen fixierbar sind, dass die Rohlinge an ihrer Oberseite und an ihrer Unterseite frei liegen.

Der vorliegenden Erfindung liegt die Aufgabe zugrunde, einen Werkstückträger für Rohlinge zur Bearbeitung in einer Fräsmaschine anzugeben, bei dem die obigen Nachteile vermieden sind. Dabei sollen die von dem Werkstückträger gehaltenen Rohlinge zumindest an ihrer Oberseite und ihrer Unterseite bearbeitet werden, wie dies beispielsweise bei der Herstellung von Uhrenplatinen der Fall ist, wobei der Werkstückträger aber auch für Rohlinge verwendbar sein soll, aus denen andere Teile gefertigt werden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Weitere Einzelheiten der Erfindung ergeben sich aus der nachfolgenden Beschreibung einer bevorzugten Ausführungsform eines erfindungsgemäßen Werkstückträgers sowie anhand der Zeichnungen. Dabei zeigen:
- Figur 1: eine perspektivische Ansicht eine Werkstückträgers;
- Figur 2: den ersten Klemm-Mechanismus in Form eines Schiebespanners an einer Hälfte des Werkstückträgers;
- Figur 3: den zweiten Klemm-Mechanismus in der aus dem Arbeitsraum verschwenkten Position;
- Figur 4: den zweiten Klemm-Mechanismus in der Position zum Austrennen der Fertigteile;
- Figur 5: die beiden zweiten Klemm-Mechanismen gemäß Figur 4 in einer teilweise geschnitten Darstellung ;
- Figur 6: eine weitere Schnittdarstellung der zweiten Klemm-Mechanismen;
- Figur 7: eine Aufsicht auf ein Druckstück.

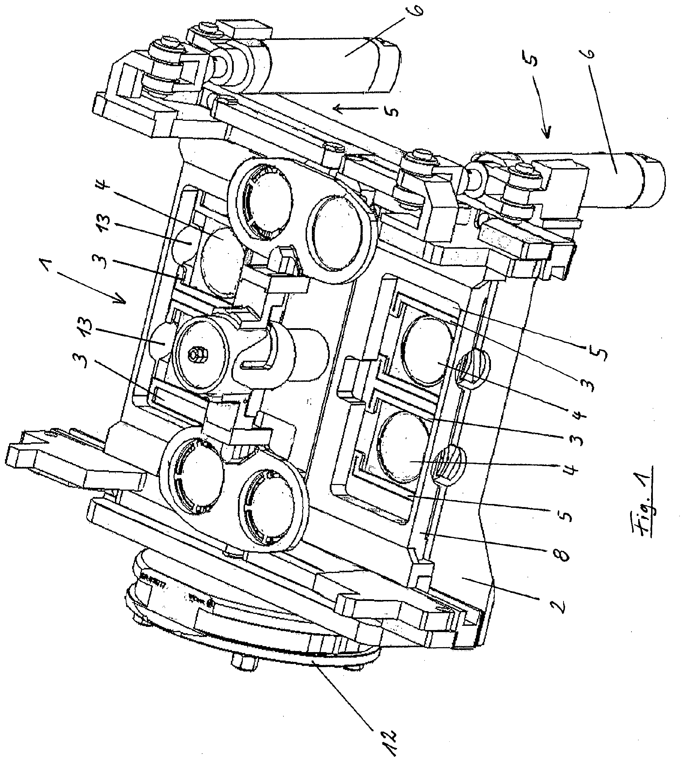

Figur 1 zeigt eine perspektivische Aufsicht auf eine Ausführungsform eines Werkstückträgers 1. Die Grundplatte 2 des Werkstückträgers 1 enthält vier Bearbeitungsstellen 3, die paarweise nebeneinander und spiegelbildlich bezüglich einer horizontalen Mittelachse angeordnet sind. Auf die Bearbeitungsstellen 3 sind in der Darstellung der Figur 1 vier Rohlinge 4 aufgelegt, die durch zwei erste Klemm-Mechanismen 5 auf der Grundplatte 2 fest geklemmt sind. An den Bearbeitungsstellen 3 sind Aussparungen in der Grundplatte 2 ausgebildet, durch die die Rückseite der Rohlinge 4 in dem zu bearbeitenden Bereich zur Außenseite frei liegt.

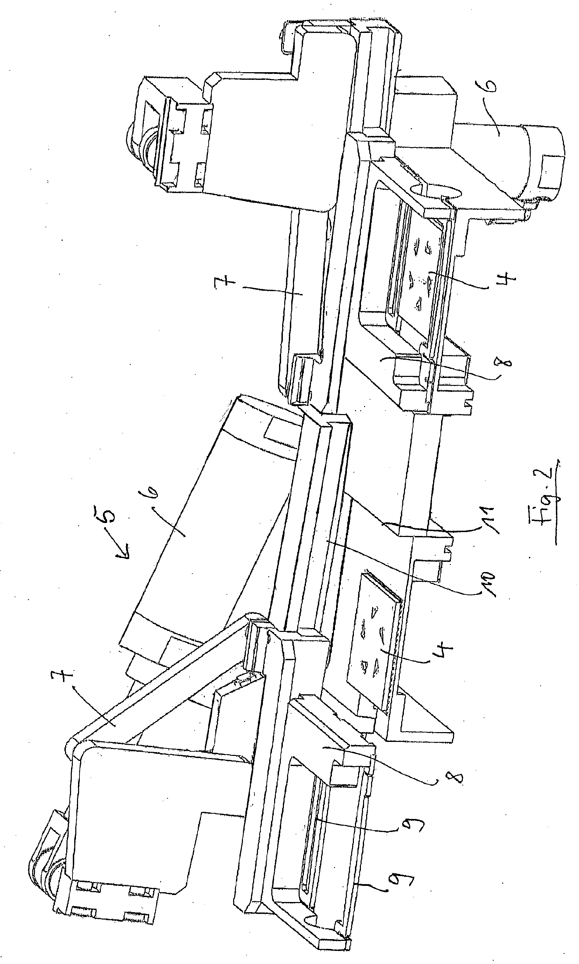

In der Darstellung der Figuren 1 und 2 sind die Rohlinge 4 zur Bearbeitung durch die beiden ersten Klemm-Mechanismen 5 fest geklemmt. Die beiden ersten Klemm-Mechanismen 5 haben jeweils einen pneumatischen Kolben/Zylinderantrieb 6 dessen Kolben mit einem Kniehebel 7 verbunden ist, der wiederum an einem Rahmen 8 angelenkt ist, der Federbleche 9 enthält. Die Kolben/Zylinderanordnung 6 schiebt zum Festklemmen der Rohlinge 4 auf ihren Bearbeitungsstellen 3 den Rahmen 8 entlang einer schrägen Führung 10 über die Rohlinge 4 bis zu einem Anschlag 11 vor, wobei die Federbleche 9 fest gegen die Rohlinge 4 gepresst werden, so dass diese zur Bearbeitung sicher fixiert sind.

Figur 2 zeigt in der linken Hälfte der Darstellung den Ausgangszustand einer ersten Klemmeinrichtung 5, während in der rechten Hälfte der Abbildung der Endzustand des Klemmvorgangs abgebildet ist.

Die festgeklemmten Rohlinge 4 werden in dem in Figur 1 dargestellten Zustand an der sichtbaren Oberseite durch das Fräswerkzeug einer Fräsmaschine bearbeitet. An der linken Seite der Grundplatte ist ein kreisförmiges Kupplungselement 12 befestigt, das mit einem Drehmechanismus der Fräsmaschine koppelbar ist, um den Werkstückträger 1 um seine horizontale Mittelachse zu drehen, die mit dem Zentrum des Kupplungselements 12 fluchtet.

In der vorderen Stirnseite des verschieblichen Rahmens 8 und der Grundplatte 2 ist eine insgesamt etwa kreisförmige Öffnung ausgebildet, durch die hindurch der Rand des Rohlings 4 bearbeitet werden kann. Hierzu wird der Werkstückträger um 90° in der einen und der anderen Richtung gedreht. Um die Unterseite der Rohling 4 bearbeiten zu können, erfolgt eine Drehung des Werkstückträgers 1 um 180°.

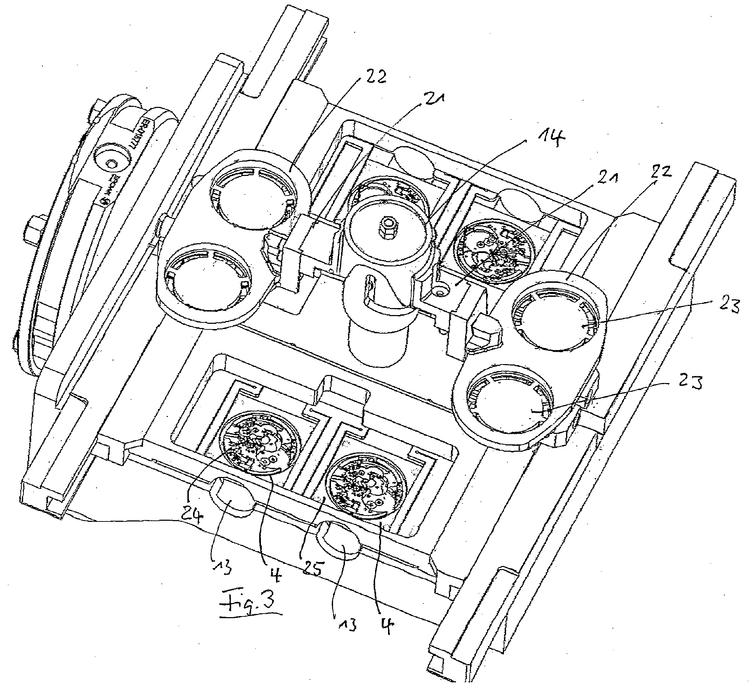

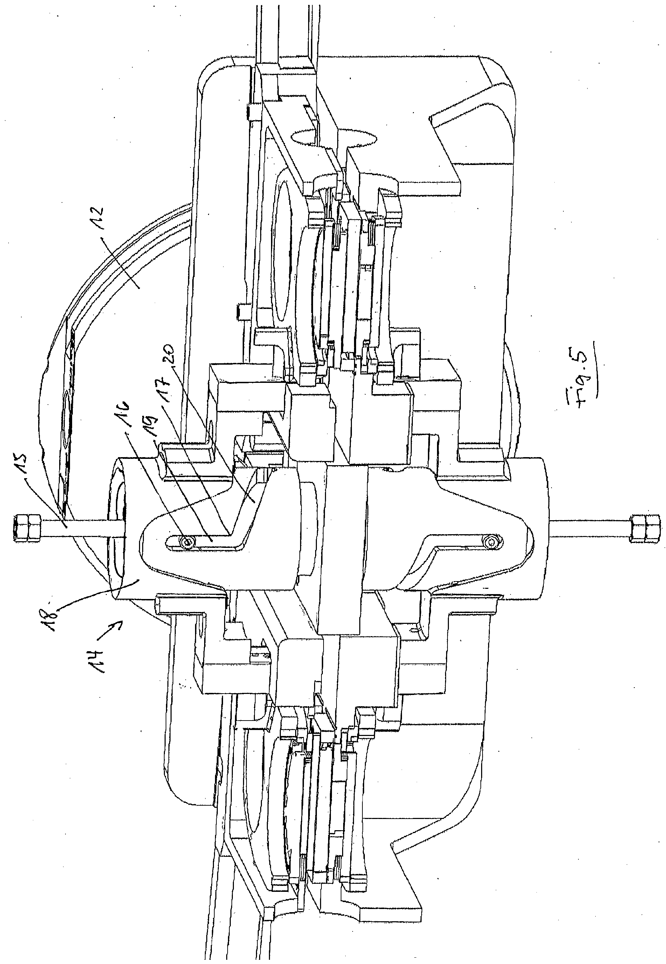

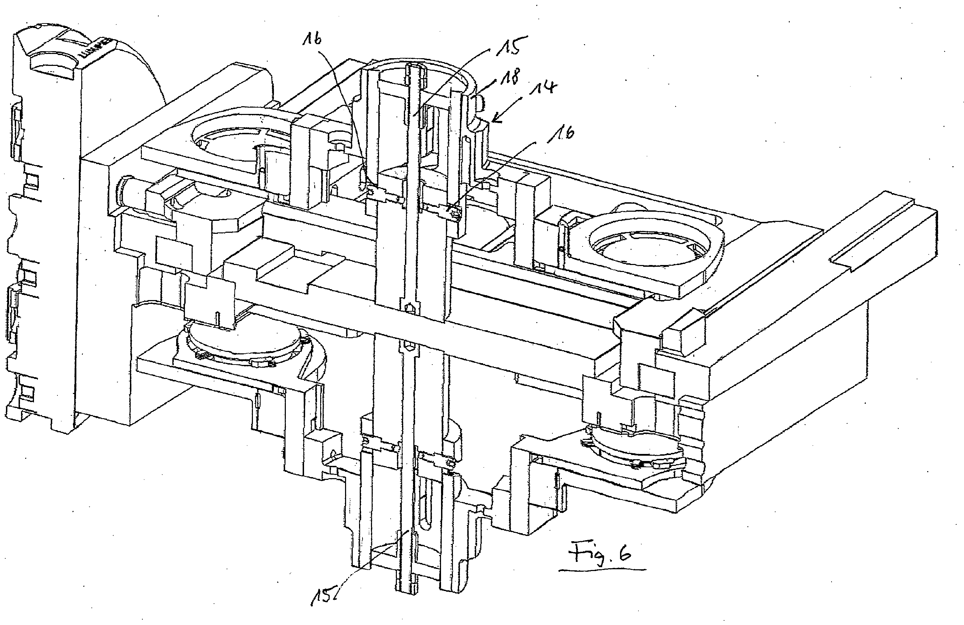

Die Figuren 3 bis 6 zeigen die beiden einander an der Oberseite und der Unterseite der Grundplatte gegenüberliegenden zweiten Klemm-Mechanismen 14. Jeder zweite Klemm-Mechanismus 14 enthält eine drehbar gelagerte Gewindespindel 15, die von der Maschinenspindel der Fräsmaschine drehbar ist und Mitnehmer 16 aufweist, die in Führungsschlitzen 17 einer Hülse 18 eingreifen. Die Führungsschlitze 17 haben einen vertikalen Abschnitt 19 und einen schräg auf die Basisplatte 2 zulaufenden Abschnitt 20. Durch Drehen der Gewindespindel 15 wird eine Drehhubbewegung der Hülse 18 hervorgerufen, an der zwei Träger 21 starr befestigt sind, die einander diametral gegenüberliegen. An den freien Enden der Träger 21 ist jeweils ein brillenartiger Rahmen 22 befestigt, der jeweils zwei Druckstücke 23 hält.

In der in Figur 3 dargestellten Position sind die Druckstücke 23 um 90° gegenüber den Rohlingen 4 verschwenkt, so dass diese bearbeitet werden können. Figur 3 zeigt den zu bearbeitenden kreisförmigen Bereich 24. Die Bearbeitung jeder Seite schließt die Ausbildung einer ringförmigen äußeren Nut in den Rohlingen 4 ein, wobei nach Bearbeitung beider Seiten mehrere Stege den bearbeiteten Teil 24 mit dem restlichen Teil 25 der Rohlinge 4 verbinden.

Derselbe zweite Klemm-Mechanismus 14 befindet sich in spiegelbildlicher Anordnung an der Unterseite des Werkstückträgers 1.

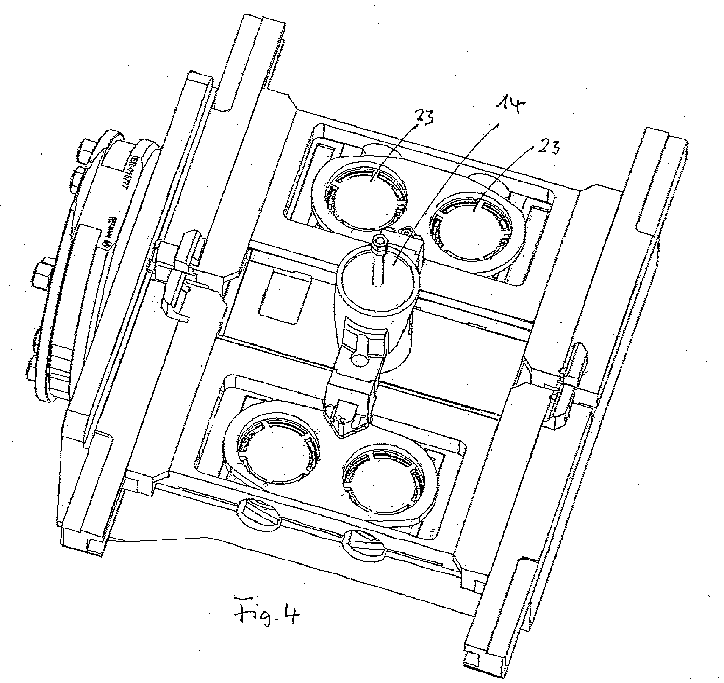

In der Darstellung der Figur 4 sind die Druckstücke 23 durch eine Hub-Drehbewegung auf die Rohlinge 4 gepresst, so dass die zwischen den bearbeiteten Teilen 24 und den restlichen Teilen 25 der Rohlinge verbleibenden Stege durchgetrennt werden können.

Die Druckstücke 23 haben dabei vorzugsweise einen etwas kleineren Durchmesser als die bearbeiteten Teile 24 der Rohlinge 4.

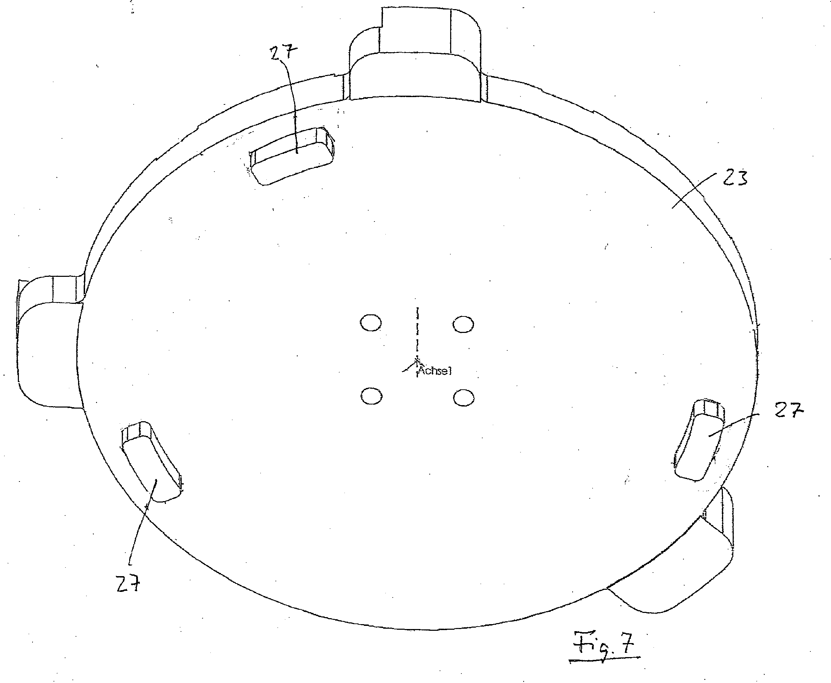

Figur 7 zeigt ein Druckstück 23 mit vorstehenden Auflagern 27. Die Auflager 27 der beiden zweiten Klemm-Mechanismen 14 liegen im festgeklemmten Zustand der Rohlinge bzw. der bearbeiteten Bereiche der Rohlinge einander gegenüber. Hierdurch wird erreicht, dass der freizuschneidende Bereich der Rohlinge 4 fixiert ist.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Werkstückträger zur Bearbeitung von einem oder mehreren Rohlingen wie Uhrenplatinen in einer Fräsmaschine, mit wenigstens einem ersten Klemm-Mechanismus (5), der so ausgebildet ist, dass mit ihm Rohlinge (4) so an ihren Bearbeitungsstellen (3) fixiert werden können, dass die Rohlinge (4) an ihrer Oberseite und an ihrer Unterseite zur Bearbeitung frei liegen,
**gekennzeichnet durch**
zwei zweite Klemm-Mechanismen (14), die an der Oberseite und der Unterseite des Werkstückträgers (1) einander gegenüber liegend angeordnet sind und Druckstücke (23) halten, die zwischen einer von dem Bearbeitungsraum getrennten Position und einer Klemmposition verschwenkbar sind, wobei die Druckstücke so ausgebildet sind, dass sie auf den bearbeiteten Teil (24) der Rohlinge (4) gepresst werden können, sodass dieser aus den Rohlingen (4) austrennbar ist.

2. Werkstückträger nach Anspruch 1,
**dadurch gekennzeichnet,**
**dass** jeder zweite Klemm-Mechanismus eine drehbare Gewindespindel (15) mit Mitnehmern (16) aufweist, die in Führungsbahnen (17) einer Hülse (18) eingreifen, an der wenigstens ein Träger (21) mit Druckstücken (23) befestigt ist, wobei die Führungsbahnen (17) eine Drehhubbewegung des wenigstens einen Trägers (21) hervorrufen.

3. Werkstückträger nach den Ansprüchen 1 und 2,
**dadurch gekennzeichnet,**
**dass** die Führungsbahnen (17) durch Schlitze in der Hülse gebildet sind, die einen vertikalen Abschnitt (19) und einen anschließenden schräg auf den Werkstückträger (1) zu verlaufenden Abschnitt (20) haben.

4. Werkstückträger nach den Ansprüchen 1 bis 3,
**dadurch gekennzeichnet,**
**dass** die Druckstücke (23) einen plattenförmigen Basiskörper mit vorstehenden Auflagern (27) haben.

5. Werkstückträger nach einem der Ansprüche 1 bis 4,
**gekennzeichnet durch**
eine Dreheinrichtung, mit der der Werkstückträger (1) um eine horizontale Achse drehbar ist, wobei die Dreheinrichtung ein seitlich an dem Werkstückträger befestigtes Kupplungselement (12) aufweist, das mit einem Drehmechanismus einer Fräsmaschine koppelbar ist.

6. Werkstückträger nach den Ansprüchen 1 bis 5,
**dadurch gekennzeichnet,**
**dass** der wenigstens eine erste Klemm-Mechanismus (5) eine Antriebseinrichtung, vorzugsweise einen Pneumatikzylinder (6), einen damit gekoppelten Kniehebel (7) und einen von dem Kniehebel (7) verschiebbaren Rahmen (8) mit Federblechen (9) aufweist, die so ausgebildet sind, dass sie gegen Ränder der Rohlinge (4) gepresst werden können, wenn der Rahmen (8) entlang einer schiefen Ebene (10) in seine Endposition verschoben wird.

## Claims

1. A workpiece holder for machining one or more blanks, such as watch plates, in a milling machine, with at least one first clamping mechanism (5), which is so constructed that blanks (4) can be fixed with it at their machining points (3) so that the blanks (4) are exposed for machining at their upper surface and at their lower surface, **characterised by** two second clamping mechanisms (14), which are arranged opposite to one another at the upper surface and the lower surface of the workpiece holder (1) and hold pressure members (23), which are pivotable between a position spaced from the machining space and a clamping position, wherein the pressure members are so constructed that they can be pressed against the machined portion (24) of the blanks (14) so that it is separable from the blanks (14).

2. A workpiece holder as claimed in Claim 1, **characterised in that** each second clamping mechanism includes a rotatable threaded spindle (15) with carriers (16), which engage in guide tracks (17) in a sleeve (18), to which at least one carrier (21) is fastened with pressure members (23), wherein the guide tracks (17) cause a rotary lifting movement of the at least one carrier (21).

3. A workpiece holder as claimed in Claims 1 and 2, **characterised in that** the guide tracks (17) are constituted by slots in the sleeve, which have a vertical section (19) and an adjoining section (20) extending obliquely towards the workpiece holder (1).

4. A workpiece holder as claimed in Claim 1 to 3, **characterised in that** the pressure members (23) have a plate-shaped base body with projecting supports (27).

5. A workpiece holder as claimed in one of Claims 1 to 4, **characterised by** a rotary device, with which the workpiece holder (1) is rotatable about a horizontal axis, wherein the rotary device includes a coupling element (12) fastened laterally to the workpiece carrier, which may be coupled to a rotary mechanism of a milling machine.

6. A workpiece holder as claimed in Claims 1 to 5, **characterised in that** the at least one first clamping mechanism (5) includes a drive device, preferably a pneumatic cylinder (6), a toggle lever (7) coupled to it and a frame (8), moveable by the toggle lever (7), with spring metal plates (9), which are so constructed that they can be pressed against edges of the blanks (14) when the frame (8) is moved along an oblique plane (10) into its end positon.

## Revendications

1. Support de pièce pour le traitement d'une ou de plusieurs pièces brutes telles que des platines d'horloge dans une fraiseuse, avec au moins un premier mécanisme de serrage (5) qui est configuré de telle sorte que des pièces brutes (4) peuvent être fixées avec celui-ci au niveau de leurs sites de traitement (3) de telle sorte que les pièces brutes (4) sont exposées en vue d'un traitement au niveau de leur face supérieure et de leur face inférieure,
**caractérisé par**
deux deuxièmes mécanismes de serrage (14) qui sont disposés l'un en face de l'autre au niveau de la face supérieure et de la face inférieure du support de pièce (1) et maintiennent des éléments de pression (23) qui sont orientables entre une position séparée de l'espace de traitement et une position de serrage, les éléments de pression étant configurés de telle sorte qu'ils peuvent être pressés sur la partie traitée (24) des pièces brutes (4) afin que celle-ci soit séparable des pièces brutes (4).

2. Support de pièce selon la revendication 1, **caractérisé en ce**
**que** chaque deuxième mécanisme de serrage présente une broche filetée pivotante (15) avec des entraîneurs (16) qui viennent en prise dans des rails de guidage (17) d'un manchon (18) au niveau duquel est fixé au moins un support (21) avec des éléments de pression (23), les rails de guidage (17) causant un mouvement d'élévation avec rotation de l'au moins un support (21).

3. Support de pièce selon les revendications 1 et 2, **caractérisé en ce**
**que** les rails de guidage (17) sont formés par des fentes dans le manchon qui présentent un tronçon vertical (19) et un tronçon (20) adjacent destiné à passer en biais sur le support de pièce (1).

4. Support de pièce selon les revendications 1 à 3, **caractérisé en ce que**
les éléments de pression (23) ont un corps de base en forme de plaque avec des appuis saillants (27).

5. Support de pièce selon l'une des revendications 1 à 4, **caractérisé par**
un dispositif de rotation avec lequel le support de pièce (1) peut tourner autour d'un axe horizontal, le dispositif de rotation présentant un élément de couplage (12) fixé latéralement au niveau du support de pièce et qui peut être couplé à un mécanisme de rotation d'une fraiseuse.

6. Support de pièce selon les revendications 1 à 5, **caractérisé en ce**
**que** l'au moins un premier mécanisme de serrage (5) présente un dispositif d'entraînement, de préférence un vérin pneumatique (6), un levier coudé (7) couplé à celui-ci et un cadre (8) déplaçable par le levier coudé (7) avec des tôles élastiques (9) qui sont configurées de telle sorte qu'elles peuvent être pressées contre des bords des pièces brutes (4) lorsque le cadre (8) est déplacé le long d'un plan incliné (10) dans sa position finale.
